# EUROPÄISCHE PATENTSCHRIFT

(11) **EP 3 921 710 B1**
(45) Veröffentlichungstag und Bekanntmachung des Hinweises auf die Patenterteilung: **11.09.2024**
(21) Anmeldenummer: 20710795.4
(22) Anmeldetag: 26.02.2020
(51) Int. Cl.: G05B 19/418

(54) **VERFAHREN ZUR AUTOMATISCHEN INTERPRETATION EINES ROHRLEITUNGSSCHEMAS**
METHOD FOR AUTOMATICALLY INTERPRETING A PIPE LAYOUT
PROCÉDÉ D'INTERPRÉTATION AUTOMATIQUE D'UN SCHÉMA DE TUYAUTERIE

(30) Priorität: 05.03.2019 EP 19160877
(43) Veröffentlichungstag der Anmeldung: 15.12.2021
(73) Patentinhaber: Siemens Aktiengesellschaft, 80333 München (DE)
(72) Erfinder: WENDELBERGER, Klaus, 68789 St. Leon-Rot (DE)
(74) Vertreter: Siemens Patent Attorneys
(86) Internationale Anmeldenummer: PCT/EP2020/055014
(87) Internationale Veröffentlichungsnummer: WO 2020/178095

(56) Entgegenhaltungen:
- EP-A2- 3 029 535
- WO-A1-2017/076420
- US-A1- 2009 282 067

## Beschreibung

Die Erfindung betrifft ein Verfahren zur Erzeugung von Automatisierungsfunktionen durch automatische Interpretation eines Rohrleitungsschemas, nämlich eines Rohrleitungsschemas in Form eines sogenannten Rohrleitungs- und Instrumentenschemas (R&I-Schema; englisch: Piping and Instrumentation Diagram oder P&ID), insbesondere für verfahrenstechnische Anlagen oder Kraftwerksanlagen. Solche Rohrleitungsschemata werden in grundsätzlich an sich bekannter Art und Weise zur Projektierung einer spezifischen verfahrenstechnischen Anlage verwendet. Der Begriff Anlage umfasst auch eine Teilanlage einer größeren Anlage, zum Beispiel eine innerhalb einer größeren Anlage zum Heizen oder Kühlen bestimmte Teilanlage, sowie einen Anlagenteil, also zum Beispiel eine Mischeinrichtung.

Bei einer verfahrenstechnischen Anlage kann zwischen Primärtechnik und Sekundärtechnik unterschieden werden. Die Primärtechnik umfasst den Aufbau der Anlage aus verfahrenstechnischer oder technologischer Sicht, also die verfahrenstechnischen Komponenten der Anlage, wie z.B. Behälter, Pumpen, Ventile, Wärmetauscher, und ihre Verbindung miteinander, insbesondere Rohrleitungen. Die Sekundärtechnik ertüchtigt die Primärtechnik zum bestimmungsgemäßen Betrieb der Anlage, wobei unterschiedliche Sekundärtechniken unterschiedliche Funktionen beim Betrieb der Anlage erfüllen.

Die Planung oder Projektierung der Primärtechnik erfolgt mittels eines Anlagenplanungswerkzeugs (z.B. COMOS von Siemens) in Form einer Erstellung eines Fließ- oder Rohrleitungsschemas (R&I-Schema) der Anlage, wobei grafische Prozessobjekte, welche Komponenten der verfahrenstechnischen Anlage repräsentieren, miteinander verknüpft werden. Die konkreten Prozessobjekte (Instanzen von Objektklassen) enthalten technische Informationen über die Parameter der von ihnen repräsentierten Komponenten, wie z.B. Rohrleitungsdurchmesser, Leistungsaufnahme von Motoren oder das Füllvolumen eines Behälters. Das R&I-Schema kann auch bereits die Sensorik und Aktorik (Messumformer und Antriebe für Stellorgane) der Anlage mit den technischen Informationen über die Sensoren und Aktoren enthalten oder die entsprechenden Informationen können in dem Anlagenplanungswerkzeug eingegeben werden.

Eine wesentliche Sekundärtechnik stellt die Automatisierung der Anlage dar, die wiederum in unterschiedliche Teilbereiche wie Automatisierungssoftware, Automatisierungshardware sowie Bedienen & Beobachten unterteilt werden kann, deren Lösungen bisher oft von unterschiedlichen Fachleuten (Automatisierungs-Ingenieure, Projekteure) wie Hardware-Ingenieuren, Software-Ingenieuren, HMI- (Human Machine Interface-) Ingenieuren projektiert wurden.

Neben der Automatisierung ist die Elektrifizierung der Anlage als weitere Sekundärtechnik von Bedeutung. Alle elektrischen Anlagenkomponenten wie insbesondere die Motoren müssen mit elektrischem Strom versorgt werden. Hierzu sind die Komponenten der Elektrifizierung wie Transformatoren, Umrichter, Schaltanlagen usw. bereitzustellen.

Als weitere Sekundärtechniken sind z.B. die Gebäudetechnik oder die Telekommunikation zu nennen.

Der grundlegende Schritt bei der Planung einer prozesstechnischen Anlage ist die Erstellung eines Rohrleitungsschemas. Das Rohrleitungsschema umfasst alle prozesstechnischen Komponenten der Anlage, wie Behälter, Pumpen, Lüfter, Antriebe, Sensoren usw., sowie die Rohrleitungen, über welche die Komponenten miteinander verbunden sind, und diese sind in dem Rohrleitungsschema dargestellt. Nach dem aktuellen Stand der Technik kann ein solches Rohrleitungsschema bereits alle produktbezogenen Informationen über die Komponenten der Anlage enthalten. Bei den Sensoren können dies beispielsweise Informationen, die sich auf einen Messbereichsanfang und ein Messbereichsende, eine Anschlussart (zum Beispiel Profibus, 4-20 mA verdrahtet), einen jeweiligen Hersteller und dergleichen beziehen, sein. Bei den Rohrleitungen können dies zum Beispiel Informationen wie Material, Durchmesser, Wandstärke usw. sein.

Aus der EP 3 029 535 A2 ist ein Ansatz zur Planung einer verfahrenstechnischen Anlage bekannt, bei dem Daten zwischen einem Rohrleitungsdiagramm (R&I Schema) und einem Automatisierungssystem ausgetauscht und entsprechend synchronisiert werden. Hierzu werden Templates, also Vorlagen oder Standards verwendet. Das Verfahren umfasst das Parsen eines R&I-Schemas und das Identifizieren von Instrumenten (Objekten) und / oder Gruppen von Instrumenten (Objekten) innerhalb des R&I-Schemas, das Identifizieren eines oder mehrerer zugehöriger Eingabe- und Ausgabe-Tags jedes identifizierten Instruments und / oder mit jeder identifizierten Gruppe von Instrumenten innerhalb des R&I-Schemas und das Herstellen mindestens einer Beziehung zwischen dem einen oder den mehreren Eingabe- und Ausgabe-Tags, wobei die Eingabe- und Ausgabe-Tags für ein Instrument und / oder eine Gruppe von Instrumenten und die mindestens eine Beziehung zwischen den entsprechenden Eingabe-Tags und Ausgabe-Tags aus einer Vorlagenbibliothek abgeleitet werden. Basierend auf den Templates und einer Regelbasis werden entsprechende Regelkreise für jede hergestellte Beziehung zwischen den Eingabe-Tags und den Ausgabe-Tags identifiziert, wobei der Regelkreis ein oder mehrere Instrumente steuert.

Aus der WO 2017/076420 A1 ist ein System und Verfahren zur Konfiguration des Automatisierungssystems für eine prozesstechnische Anlage bekannt. Ausgangspunkt ist auch hier das R&I-Schema der Anlage, in dem Repräsentanten der Komponenten der Anlage über Leitungen miteinander verbunden sind. Für die Repräsentanten der Anlagenkomponenten sind Schnittstellen für Verriegelungseigenschaften, die z. B. zum Abschalten der Komponente führen oder ein Einschalten der Komponente verhindern, definiert. Durch Analyse z.B. Bildverarbeitung der R&I-Schemata wird für die einzelnen Komponenten ermittelt, mit welchen weiteren Komponenten sie verbunden sind, wobei weiterhin durch Analyse der Schnittstellen, diejenigen der weiteren Komponenten, genauer ihre Repräsentanten, ausgewählt werden, deren Verriegelungseigenschaften für die untersuchten Komponenten und/oder Betriebsbedingung relevant sind. Die ausgewählten Repräsentanten der Komponenten werden an ihren Schnittstellen miteinander verbunden, wobei anschließend automatisch eine Ablauflogik für die Automatisierung dieser Komponenten generiert wird, wobei diese Strukturkomponenten in analoger Art und Weise wie die Anlagenkomponenten behandelt werden.

Aus der US 2009/0282067 A1 ist ein Verfahren und ein System zum automatischen Erzeugen von Prozesssteuerungsdatenbanken und Prozessgrafiken für ein verteiltes Prozesssteuerungssystem bekannt. Programmierte Prozesssteuerungsdatenbank- und Prozessgrafikgeneratoren rendern automatisch die Ausgabe in einer Zielprozesssteuerungssystemumgebung (z. B. InFusion Engineering Environment - oder IEE) aus einer Zwischendarstellung (z. B. XML) von Prozesssteuerungs- und Prozessgrafikdefinitionen. Das System stellt auch eine Regeldatenbank bereit, die einen Satz von Transformationen von der schemabasierten Zwischensprache in ein Zielgrafikformat definiert. Das System ist ferner so programmiert, dass es Transformationsregeln aus der Regeldatenbank auf die Grafikdefinition des Steuersystems anwendet, um grafische Ansichten des verteilten Steuersystems einschließlich aufgelöster Aliase wiederzugeben.

In verschiedenen Normen ist festgelegt, wie Rohrleitungsschemata aufzubauen und zu verwenden sind. In der ISO 16028 (Diagrams for the chemical and petrochemical industry) sind die entsprechenden Diagramme spezifiziert und die zu verwendenden grafischen Symbole definiert. Die IEC 62424 (Representation of process control engineering - Requests in P&I diagrams and data exchange between P&ID tools and PCE-CAE tools) definiert Anforderungen an Rohrleitungsschemata und den Datenaustausch zwischen Anlagenplanungstools und Engineeringtools für Automatisierungssysteme.

Im Hause der Anmelderin werden im Rahmen einer Rohrleitungsschemakonfiguration zusätzlich betriebliche Anforderungen und Spezifikationen für die zu errichtende Anlage in ein Rohrleitungsschema aufgenommen. Dieser Schritt wird als Konfiguration bezeichnet (Konfiguration des Rohrleitungsschemas) und das Ergebnis ist ein konfiguriertes Rohrleitungsschema.

Während das Rohrleitungsschema ursprünglich nur beschreibt, aus welchen Komponenten eine prozesstechnische Anlage besteht und wie diese miteinander verbunden sind, ist im konfigurierten Rohrleitungsschema zusätzlich eine Information darüber enthalten, wie diese Anlage im manuellen Modus (Handbetrieb) und im automatischen Modus (Automatikbetrieb) zu betreiben ist. Die Konfiguration eines Rohrleitungsschemas ist die Basis für eine vollständig automatische Erstellung von Engineering-Unterlagen im Bereich der Automatisierung und Elektrifizierung.

Auch heute müssen die betrieblichen Anforderungen einer geplanten Anlage definiert werden. Ansonsten wären ein Engineering einer Automatisierung der jeweiligen Anlage und einer Elektrifizierung der Anlage nicht möglich.

In der oben bereits erwähnten Norm IEC 62424 ist beschrieben, wie Rohrleitungsschemata aufzubauen sind. Darin ist unter anderem auch beschrieben, dass Grenzwerte von Signalen in einem Rohrleitungsschema angezeigt werden können. Außerdem ist beschrieben, dass unter Verwendung von Symbolen, welche Automatisierungsfunktionen repräsentieren, die funktionalen Beziehungen zwischen Sensoren und Aktoren dargestellt werden können. Insgesamt geht es dabei jedoch nur um die grundsätzliche Darstellung einiger wichtiger Automatisierungsbeziehungen.

Die Norm IEC 62424 enthält explizit den Satz: "Detailed information on complex control functions shall not be part of the P&ID. Therefore, additional documentation (e.g. control narratives, function charts) has to be prepared to define the required functionality."

Informationen zu betrieblichen Anforderungen werden entsprechend bisher parallel zu dem Rohrleitungsschema in separaten Dokumenten (Texte, Tabellen, Logikpläne, Zeichnungen etc.), also unabhängig vom Rohrleitungsschema, definiert. In welcher Form und in welchem Format solche Dokumente zur Verfügung gestellt werden, hängt sehr stark vom jeweiligen Ersteller und ebenso vom jeweiligen Engineeringbereich (Regelung, Steuerung, Bedienen und Beobachten, Schutz etc.) ab.

Bei dem hier vorgeschlagenen Ansatz ist vorgesehen, dass betriebliche Anforderungen als integraler Bestandteil eines Rohrleitungsschemas spezifiziert werden. Damit stehen Informationen über die betrieblichen Anforderungen unmittelbar zur Verfügung und sind einer automatischen Interpretation zugänglich. Bisher wird eine Zusammenschau eines Rohrleitungsschemas mit zumindest einem Dokument der oben genannten Art stets von einem menschlichen Experten als gedankliche Tätigkeit ausgeführt.

Eine Aufgabe der vorliegenden Erfindung besteht entsprechend darin, ein Verfahren anzugeben, welches eine automatische Interpretation eines Rohrleitungsschemas (R&I-Schema) einer technischen Anlage ermöglicht, insbesondere darin, ein Verfahren anzugeben, bei dem im Rahmen der automatischen Interpretation eines Rohrleitungsschemas automatisch Automatisierungsfunktionen erzeugt werden, welche die von dem Rohrleitungsschema umfassten betrieblichen Anforderungen in Software umsetzen und in eine Automatisierungssoftware zur Automatisierung der jeweilige Anlage übernommen werden können.

Diese Aufgabe wird mittels eines Verfahrens mit den Merkmalen des Anspruchs 1 sowie mittels eines eine Implementation des Verfahrens umfassenden Computerprogramms gelöst. Der hier vorgeschlagene Ansatz kommt bevorzugt für verfahrenstechnische Anlagen oder Kraftwerksanlagen in Betracht.

Ein Rohrleitungsschema umfasst in an sich bekannter Art und Weise als Repräsentanten von Komponenten einer Anlage Objekte und als Repräsentanten von Verbindungen zwischen Komponenten der Anlage Verbindungen zwischen Objekten, wobei jede Verbindung selbst wieder ein Objekt (ein spezielles Objekt) im Rohrleitungsschema ist.

Die Objekte sind bereits im Rahmen der Erstellung des Rohrleitungsschemas benannt oder werden zumindest im Rahmen der Konfiguration des Rohrleitungsschemas benannt. Zur Aufnahme eines Repräsentanten eines Ventils einer Anlage in ein Rohrleitungsschema wird zum Beispiel (durch einen menschlichen Experten) aus einer Bibliothek ein entsprechendes Datenobjekt ausgewählt, welches zumindest zu einer symbolischen Darstellung eines Ventils in dem Rohrleitungsschema führt. Das Datenobjekt ist mit einem Objekttyp, hier zum Beispiel "Ventil", verbunden. Für andere technische Einheiten einer Anlage und ein Objekt, welche jeweils eine Einheit repräsentiert, gilt dasselbe entsprechend.

Bei dem hier vorgeschlagenen Verfahren sind Objekte und/oder Verbindungen eines Rohrleitungsschemas mit betrieblichen Anforderungen verknüpft. Die betrieblichen Anforderungen werden auf Basis einer vorgegebenen Menge von Wirkungsweisen (Wirkungsweise der betrieblichen Anforderung) sowie auf Basis einer vorgegebenen Menge von Randbedingungen (Randbedingung der betrieblichen Anforderung) definiert. Die den verwendbaren Wirkungsweisen und Randbedingungen zugrunde liegenden Mengen gewährleisten eine elektronisch auswertbare Darstellung einer jeden betrieblichen Anforderung. Die Mengen definieren gewissermaßen ein Vokabular, welches für eine Formulierung/einer betrieblichen Anforderung zu Verfügung steht, und damit ein feststehendes und begrenztes Vokabular, mit dem eine jede betriebliche Anforderung formuliert/wird.

Bei der automatischen Interpretation des Rohrleitungsschemas werden sukzessive die von dem Rohrleitungsschema umfassten betrieblichen Anforderungen ausgewertet. Im Zuge der Auswertung wird automatisch zu einer betrieblichen Anforderung und zumindest auf Basis einer von der jeweiligen betrieblichen Anforderung als Zweckbestimmung umfassten Wirkungsweise eine Automatisierungsfunktion erzeugt, also eine Implementation der gemäß der jeweiligen betrieblichen Anforderung zu realisierenden Funktion in Software, also in ausführbaren Programmcode, welcher bei einer Ausführung mittels eines Automatisierungssystems eine Realisierung der gemäß der betrieblichen Anforderung zu realisierenden Funktion bewirkt.

Eine bei einer Definition einer betrieblichen Anforderung auswählbare Wirkungsweise lautet zum Beispiel "wird geregelt von". Diese Wirkungsweise impliziert die Notwendigkeit einer Regelung für eine Umsetzung der betrieblichen Anforderung in Software. Die resultierende Automatisierungsfunktion umfasst also zumindest eine Regelungsfunktion. Damit die Regelung genau die ursprünglich definierte betriebliche Anforderung umsetzt, also zum Beispiel die Regelung einer Durchflussmenge mittels eines Regelventils, ist die Automatisierungsfunktion und allgemein jede jeweils automatisch erzeugte Automatisierungsfunktion mit den mittels der zugrunde liegenden betrieblichen Anforderung verknüpften Objekten verbunden. Diese Verbindung mit den mittels der betrieblichen Anforderung verknüpften Objekten kann in Form einer Verbindung mit den von dem Rohrleitungsschema umfassten Objekten und/oder in Form einer Verbindung mit den durch die Objekte des Rohrleitungsschemas repräsentierten realen Einheiten bestehen.

Das Verknüpfen betrieblicher Anforderungen mit Elementen (Objekte und/oder Verbindungen) des Rohrleitungsschemas kann im Rahmen des Verfahrens ausgeführt werden oder bereits vorangehend ausgeführt worden sein. Definierte betriebliche Anforderungen sind jedenfalls eine Voraussetzung für alle weiteren Schritte des hier vorgeschlagenen Verfahrens.

Das Verfahren ist zur automatischen Ausführung in Form eines im Folgenden als Engineeringwerkzeug bezeichneten Computerprogramms oder ggf. eines verteilten Computerprogramms realisiert, welches eine Implementation des hier vorgeschlagenen Verfahrens umfasst und als Mittel zur Ausführung des hier vorgeschlagenen Verfahrens fungiert. Die Erfindung ist damit ein Computerprogramm mit Programmcodeanweisungen, welche durch einen im Folgenden als Engineeringsystem bezeichneten Computer oder ggf. ein verteiltes Computersystem ausführbar sind und im Betrieb ausgeführt werden, sowie auch ein Speichermedium mit einem derartigen Computerprogramm, also ein Computerprogrammprodukt mit Programmcodemitteln, und schließlich auch ein Engineeringsystem, in dessen Speicher als Mittel zur Durchführung des Verfahrens und seiner Ausgestaltungen ein solches Computerprogramm geladen oder ladbar ist.

Das als Implementation des hier vorgeschlagenen Verfahrens fungierende Computerprogramm (Engineeringwerkzeug) bzw. das eine Implementation des hier vorgeschlagenen Verfahrens umfassende Computerprogramm wird auf dem Engineeringsystem und mittels des Engineeringsystems ausgeführt. Das Engineeringwerkzeug kann auch Funktionen zum Erstellen und Bearbeiten eines Rohrleitungsschemas oder den kompletten üblichen Funktionsumfang zum Erstellen und Bearbeiten eines Rohrleitungsschemas umfassen und wird damit zu einer vollständigen Engineeringumgebung.

Wenn hier und im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen (aufgrund des Engineeringwerkzeugs oder unter Kontrolle des Engineeringwerkzeugs), sofern nicht ausdrücklich darauf hingewiesen ist, dass einzelne Aktionen durch einen Benutzer des Engineeringwerkzeugs veranlasst werden. Zumindest bedeutet jede Verwendung des Begriffs "automatisch", dass die betreffende Aktion aufgrund des Engineeringwerkzeugs oder unter Kontrolle des Engineeringwerkzeugs erfolgt.

Ein wesentlicher Vorteil der vorliegenden Erfindung besteht darin, dass auf Basis einer Definition von betrieblichen Anforderungen, insbesondere von dem Rohrleitungsschema umfasste betriebliche Anforderungen, automatisch Algorithmen zur Umsetzung der betrieblichen Anforderungen im Bereich der Sekundärtechnik entstehen, also insbesondere zur automatisch Umsetzung der betrieblichen Anforderungen in Automatisierungssoftware, also zum Beispiel Algorithmen zur Implementation von Regelungsvorgängen. Ein weiterer Vorteil besteht darin, dass die zugrunde liegende Definition der betrieblichen Anforderungen auf technologische Art und Weise erfolgen kann, d.h. der Anlagenplaner definiert den verfahrenstechnischen Zweck einer Komponente (zum Beispiel Heizen, Mischen etc.), ohne darüber informiert sein zu müssen, wie ein solcher Zweck im Bereich der Sekundärtechnik konkret zu erfüllen ist. Die Grundlage für die Möglichkeit einer technologischen Definition der betrieblichen Anforderungen wird durch die Verwendbarkeit einer Menge von Wirkungsweisen sowie einer Menge von Randbedingungen geschaffen.

Optional generiert das Engineeringwerkzeug (oder eine die Funktionalität des Engineeringwerkzeugs umfassende Entwicklungsumgebung) die betrieblichen Anforderungen automatisch, nämlich auf Basis eines vom Anwender definierten verfahrenstechnischen Zwecks, den eine bestimmte Anlagenkomponente zu erfüllen hat. Wenn der Anwender zum Beispiel festlegt, dass ein bestimmtes Ventil das Mindestmengenventil einer Pumpe ist, können die entsprechenden betrieblichen Anforderungen daraus automatisch abgeleitet werden.

Bei redundanten Anlagenstrukturen ist bei einer besonderen Ausführungsform des hier vorgeschlagenen Ansatzes vorgesehen, dass der Anwender lediglich das Vorhandensein der Redundanz sowie die betrieblichen Anforderungen der ersten Struktur definieren muss. Alle weiteren Definitionen wie die Ermittlung der Redundanzpartner der einzelnen Komponenten oder die betrieblichen Anforderungen der weiteren Strukturen werden vom Engineeringwerkzeug automatisch vorgenommen.

Auf Basis des hier vorgeschlagenen Ansatzes ist eine deutliche Vereinfachung der Anlagenplanung mit entsprechenden Zeit- und Kostenersparnissen möglich. Das Verfahren wird vollständig mittels genau eines Software-Werkzeugs ausgeführt, nämlich dem Engineeringwerkzeug, sodass keine Datenübertragung zu zusätzlichen Systemen mehr erforderlich ist. Dadurch werden ansonsten mögliche Übertragungsfehler und Dateninkonsistenzen vermieden. Bei einer entsprechenden Ausführung kann das Engineeringsystem dem Anwender in grundsätzlich optionaler Art und Weise anzeigen, an welchen Stellen die Definition von betrieblichen Anforderungen noch nicht vollständig ist. Damit wird eine deutliche Erhöhung der Qualität der Anlagenplanung erreicht.

Für die weitere Beschreibung gilt zur Vermeidung unnötiger Wiederholungen, dass Merkmale und Details, die im Zusammenhang mit dem genannten Verfahren zur automatischen Interpretation eines Rohrleitungsschemas beschrieben sind, selbstverständlich auch für ein Computerprogramm mit einer Implementation des Verfahrens und umgekehrt gelten. Dementsprechend kann das Computerprogramm (das Engineeringwerkzeug) auch durch Mittel, insbesondere Programmcodemittel, zur Ausführung von im Rahmen des Verfahrens ausgeführten Verfahrensschritten fortgebildet sein. Genauso kann das Verfahren durch von dem Computerprogramm ausgeführte Verfahrensschritte fortgebildet sein. Folglich gelten Merkmale und Details des Verfahrens stets auch für das korrespondierende Computerprogramm und umgekehrt, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Verfahrens wird eine Automatisierungsfunktion zu einer betrieblichen Anforderung und einerseits auf Basis einer von der jeweiligen betrieblichen Anforderung umfassten Wirkungsweise sowie andererseits zumindest einer von derselben betrieblichen Anforderung umfassten Randbedingung erzeugt. Eine kombinierte Berücksichtigung einer Wirkungsweise und zumindest einer Randbedingung ermöglicht eine noch genauere Spezifikation betrieblicher Anforderungen und eine Auswertung der Wirkungsweise einer betrieblichen Anforderung zusammen mit der oder jeder von der betrieblichen Anforderung umfassten Randbedingung gewährleistet, dass auch solche betrieblichen Anforderungen in eine Automatisierungsfunktionen umgesetzt werden.

Bei einer weiteren Ausführungsform des Verfahrens wird eine Automatisierungsfunktion zu einer betrieblichen Anforderung auf Basis einer Datenbasis mit Verfahrensanweisungen erzeugt. Die Datenbasis umfasst eine Vielzahl von Verfahrensanweisungen, wobei zu jeder von einer betrieblichen Anforderung umfassten Wirkungsweise oder Randbedingung (also zu jeder theoretisch möglichen und durch das jeweilige Vokabular begrenzten Wirkungsweise oder Randbedingung) oder jeder Kombination einer Wirkungsweise mit zumindest einer Randbedingung in der Datenbasis genau eine Verfahrensanweisung vorgehalten wird. Jede betriebliche Anforderung kann aufgrund der jeweiligen Wirkungsweise und der oder jeder zugeordneten Randbedingung also eindeutig genau einer Verfahrensanweisung zugeordnet werden oder umgekehrt kann jeweils genau eine Verfahrensanweisung aus der Datenbasis mit Verfahrensanweisungen einer betrieblichen Anforderung und deren Wirkungsweise sowie der oder jeder zugeordneten Randbedingung zugeordnet werden. Bei der automatischen Interpretation des Rohrleitungsschemas und bei einer Erzeugung einer Automatisierungsfunktion zu einer betrieblichen Anforderung wird für jede betriebliche Anforderung aus der Datenbasis diejenige Verfahrensanweisung ausgewählt, die zu der betrieblichen Anforderung passt, die also zu der Wirkungsweise der betrieblichen Anforderung oder also zu der Wirkungsweise der betrieblichen Anforderung sowie zu der oder jeder zugeordneten Randbedingung passt. Jede Verfahrensanweisung umfasst zumindest einen Arbeitsschritt und jeder Arbeitsschritt umfasst eine automatisch auswertbare Definition zur Umsetzung einer Wirkungsweise und der oder jeder zugeordneten Randbedingung in ausführbare Computerprogrammanweisungen in Form einer automatisch auswertbaren Definition zur Verwendung zumindest eines Bausteins der Automatisierungstechnik und zur Umsetzung des oder jedes jeweiligen Bausteins und dessen bzw. deren Verwendung in ausführbaren Computerprogrammanweisungen. Durch Auswahl jeweils genau einer Verfahrensanweisung zu einer betrieblichen Anforderung ist automatisch ein Arbeitsschritt oder eine Folge von Arbeitsschritten ausgewählt worden. Dieser bzw. diese setzen bei einer Ausführung durch das Engineeringwerkzeug automatisch die aufgrund der zugrunde liegenden betrieblichen Anforderung zu realisierende Wirkungsweise und ggf. zu realisierende zugeordnete Randbedingung in eine Automatisierungsfunktion um. Eine erzeugte Automatisierungsfunktion bildet oder ergänzt ein Computerprogramm, welches zur Unterscheidung als Automatisierungscomputerprogramm bezeichnet wird. Das Automatisierungscomputerprogramm ist die Automatisierungssoftware oder ein Teil der Automatisierungssoftware für die jeweilige Anlage. Das Automatisierungscomputerprogramm und damit die Automatisierungssoftware umfasst eine zumindest durch einen aus der Datenbasis ausgewählten Arbeitsschritt durchgeführte Implementation der jeweiligen betrieblichen Anforderung in Form von mittels eines Automatisierungssystems ausführbaren Computerprogrammanweisungen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein Rohrleitungsschema mit Objekten, Verbindungen zwischen Objekten und betrieblichen Anforderungen,
- FIG 2: einen Ausschnitt eines Rohrleitungsschemas mit einer mit zwei Objekten verknüpften betrieblichen Anforderung,
- FIG 3: und
- FIG 4: schematisch vereinfachte Darstellungen eines aufgrund einer betrieblichen Anforderung entstehenden und die betriebliche Anforderung kodierenden Datensatzes sowie
- FIG 5: eine Datenbasis mit Verfahrensanweisungen zur automatischen Umsetzung betrieblicher Anforderungen,
- FIG 6: eine aufgrund einer betrieblichen Anforderung entstehende und die mittels der betrieblichen Anforderung verknüpften Objekte verbindende Automatisierungsfunktion, welche als technologische Implementation der zugrunde liegenden betrieblichen Anforderung fungiert, und
- FIG 7: eine schematisch vereinfachte Darstellung eines Ablaufs des hier vorgeschlagenen Verfahrens mit Zwischenergebnissen des Verfahrens und einem aufgrund des Verfahrens resultierenden und eine Mehrzahl von Automatisierungsfunktionen gemäß FIG 5 umfassenden Automatisierungscomputerprogramm.

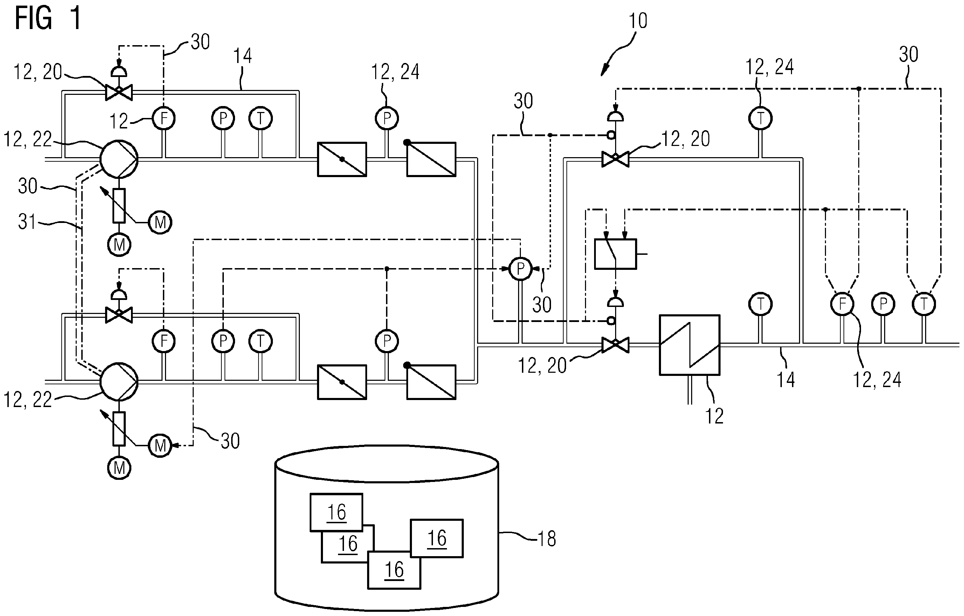

Die Darstellung in FIG 1 zeigt exemplarisch einen Ausschnitt aus einem Rohrleitungsschema 10. Dieses umfasst in grundsätzlich an sich bekannter Art und Weise Objekte 12 (nur einzelne bezeichnet) und Rohrleitungen oder allgemeine fluidische Verbindungen darstellende Verbindungen 14 (ebenfalls nur einzelne bezeichnet) zwischen den Objekten 12.

Jedem Objekt 12, insbesondere jedem Objekt 12 und jeder Verbindung 14 (Verbindung 14 als Sonderform eines Objekts 12), liegt ein Objekttyp 16 zugrunde. Zur Instanziierung von Objekten 12 auf Basis eines jeweiligen Objekttyps 16 und zur Verwendung von instanziierten Objekten 12 in einem Rohrleitungsschema 10 werden die verwendbaren Objekttypen 16 in einer Objekttypendatenbasis 18 vorgehalten.

Die Objekttypendatenbasis 18 fungiert gleichsam als Baukasten, aus dem ein Objekt 12 zur Verwendung in einem Rohrleitungsschema 10 entnehmbar ist. Das Entnehmen aus dem Baukasten (aus der Objekttypendatenbasis 18) erfolgt durch Auswahl eines Objekttyps 16, Instanziierung eines Objekts 12 auf Basis des ausgewählten Objekttyps 16 und Platzierung des instanziierten Objekts 12 im Rohrleitungsschema 10. Auf Basis ein und desselben Objekttyps 16 können grundsätzlich beliebig viele Objekte 12 instanziiert werden (der "Baukasten" erschöpft sich nicht).

Jedes in einem Rohrleitungsschema 10 verwendete Objekt 12 fungiert als Repräsentant einer gegenständlichen Einheit der jeweiligen Anlage. Die Objekte 12, 20, 22, 24 des in FIG 1 gezeigten Rohrleitungsschemas 10 fungieren zum Beispiel als Repräsentanten von Ventilen, Pumpen und einer Sensorik, nämlich als Repräsentanten solcher Einheiten in einer realen technischen Anlage, also zum Beispiel einer bereits bestehenden Anlage oder einer auf Basis des Rohrleitungsschemas 10 noch zu errichtenden Anlage. Im Interesse einer besseren Lesbarkeit der weiteren Beschreibung wird im Folgenden ein als Repräsentant eines Ventils fungierendes Objekt 12 selbst als Ventil 20 bezeichnet und das Objekt 12, 20 ist mit einer entsprechenden Bezugsziffer bezeichnet. Dies gilt entsprechend auch für ein als Repräsentant einer Pumpe 22 fungierendes Objekt 12 sowie für ein als Repräsentant eines Sensors 24 fungierendes Objekt 12.

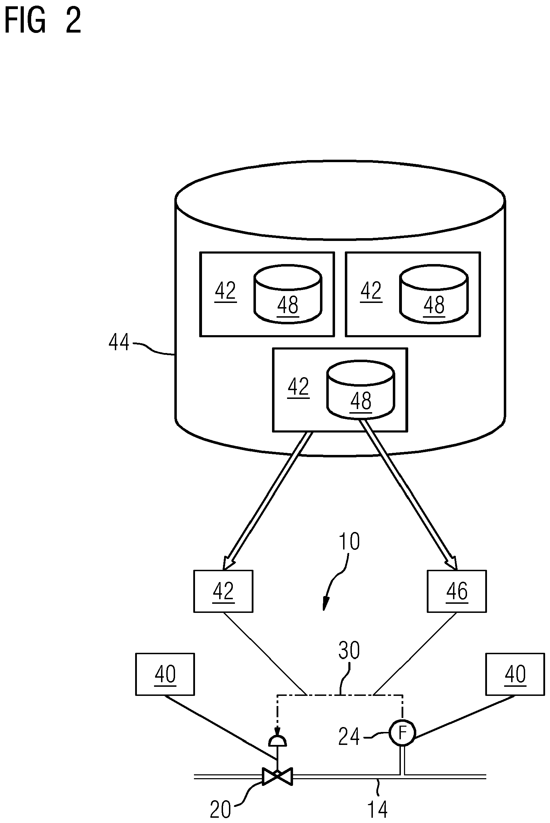

Die Darstellung in FIG 2 zeigt einen Ausschnitt eines Rohrleitungsschemas 10 wie in FIG 1. Der gezeigte Teil des Rohrleitungsschemas 10 umfasst (als Objekt 12 des Rohrleitungsschemas 10) ein Ventil 20, nämlich ein Regelventil, und als Sensorik (sowie als Objekt 12 des Rohrleitungsschemas 10) einen im Folgenden kurz als Sensor 24 bezeichneten Durchflusssensor. Das Ventil 20 und der Sensor 24 sind mittels einer in Form eines Pfeils dargestellten betrieblichen Anforderung 30 verbunden. Betriebliche Anforderungen 30 sind bereits in FIG 1 gezeigt (nur einzelne bezeichnet).

Der eine betriebliche Anforderung 30 darstellende Pfeil geht von einem Objekt 12 aus und weist auf ein anderes Objekt 12. Bei der Darstellung in FIG 2 geht der die betriebliche Anforderung 30 darstellende Pfeil von dem Sensor 24 aus und weist auf das Ventil 20. Diese Richtung ist Teil der Definition der betrieblichen Anforderung 30 und bedeutet (die Richtung kodiert), dass vom Sensor 24 stammende Daten Einfluss auf das Ventil 20 (hier: dessen Zustand/Stellung) haben sollen. Allgemein bedeutet die Richtung einer betrieblichen Anforderung 30 (die Richtung eines die betriebliche Anforderung 30 darstellenden Pfeils), dass Daten eines Objekts 12, von dem die betriebliche Anforderung 30 ausgeht, einen Zustand eines Objekts 12, bei dem die betriebliche Anforderung 30 endet, unmittelbar oder mittelbar beeinflussen sollen.

In einer weiteren Ausprägung einer betrieblichen Anforderung 30 stellt die betriebliche Anforderung eine nicht gerichtete Verbindung zwischen Objekten 12 her und wird daher in einer Verbindung ohne Pfeil dargestellt. Eine nicht gerichtete betriebliche Anforderung 31 ist in FIG 1 bereits gezeigt. In diesem Falle bedeutet die betriebliche Anforderung 31, dass sich die Zustände der Objekte 12, die über die betriebliche Anforderung 31 miteinander verbunden sind, gegenseitig beeinflussen sollen (zum Beispiel zwei Pumpen 22 sollen mit der gleichen Leistung betrieben werden).

Eine betriebliche Anforderung 30, 31 ist mit zumindest zwei Objekten 12, insbesondere mit genau zwei Objekten 12, verbunden. Der Umstand, dass eine betriebliche Anforderung 30, 31 mit zwei Objekten 12 verbunden ist, hindert nicht, dass ein und dasselbe Objekt 12 Startpunkt oder Zielpunkt mehrerer betrieblicher Anforderungen 30, 31 sein kann. Beispielsweise können die von ein und demselben Sensor 24 stammenden Daten Einfluss auf den Zustand unterschiedlicher Objekte 12 haben. Ebenso kann der Zustand ein und desselben Objekts 12 von den von unterschiedlichen anderen Objekten 12 stammenden Daten beeinflusst werden.

Zur Verbindung einer betrieblichen Anforderung 30, 31 mit zwei Objekten 12 wird zum Beispiel ausgenutzt, dass jedem Objekt 12 als Benennung 40 eine eindeutige Bezeichnung zugewiesen ist. Bei der in FIG 2 gezeigten Situation wird als Benennung 40 des Ventils (Regelventil) 20 zum Beispiel die Bezeichnung "Regelventil 1" und als Benennung 40 des Sensors (Durchflusssensor) 24 zum Beispiel die Bezeichnung "Durchflusssensor 1" verwendet. Eine in einem Rohrleitungsschema 10 verwendete Benennung 40 kann nur einmal verwendet werden, um eine Eindeutigkeit der Benennungen 40 zu gewährleisten.

Eine betriebliche Anforderung 30, 31 spezifiziert eine mögliche Art der Beeinflussung eines Objekts 12 aufgrund von Daten des jeweils anderen Objekts 12. Genau eine Art der Beeinflussung wird bei der Spezifikation einer betrieblichen Anforderung 30, 31 als Wirkungsweise 42 aus einer vorgegebenen Menge 44 von Einflussmöglichkeiten ausgewählt. Die Menge 44 steht in Form einer Datenbasis zur Verfügung. Zur besseren Übersichtlichkeit für den Anwender werden betriebliche Anforderungen 30, 31, die unterschiedliche Wirkungsweisen spezifizieren, im Rohrleitungsschema 10 unterschiedlich, zum Beispiel durch Verwendung unterschiedlicher Linientypen, dargestellt. Betriebliche Anforderungen 30, 31 mit unterschiedlichen Wirkungsweisen 42 und daher unterschiedlichen graphischen Repräsentationen sind bereits in FIG 1 gezeigt.

Der betrieblichen Anforderung 30, 31 oder zumindest einem mittels der betrieblichen Anforderung 30, 31 verknüpften Objekt 12, 20, 24 ist eine oder mehrere Randbedingungen 46 aus einer vorgegebenen Menge 48 von möglichen Randbedingungen 46 zugeordnet. Auch diese Menge 48 steht in Form einer Datenbasis zur Verfügung. Die Randbedingung 46 kann im Rahmen der Definition der betrieblichen Anforderung 30, 31 festgelegt werden. Jeder Wirkungsweise 42 ist eine bestimmte Anzahl von möglichen Randbedingungen zugeordnet. Beispielsweise ist eine mögliche Randbedingung 46 für die Wirkungsweise 42 "wird geregelt von" (vgl. FIG 2, in der die betriebliche Anforderung 30 zum Ausdruck bringt, dass der Durchfluss 24 mit Hilfe des Regelventils 20 geregelt wird) ein vorgegebener oder vorgebbarer Sollwert für die geregelte Größe. Die Wirkungsweise "Redundanz" (vgl. die betriebliche Anforderung 31 in FIG 1, die zum Ausdruck bringt, dass die beiden Pumpen 22 in einem Redundanzbetrieb zu fahren sind) umfasst als mögliche Randbedingung 46 eine Spezifikation derjenigen Signale (zum Beispiel die Leistungsaufnahmen der Pumpen 22) über welche eine Synchronisierung der betroffenen Objekte 12, 22 erfolgen soll.

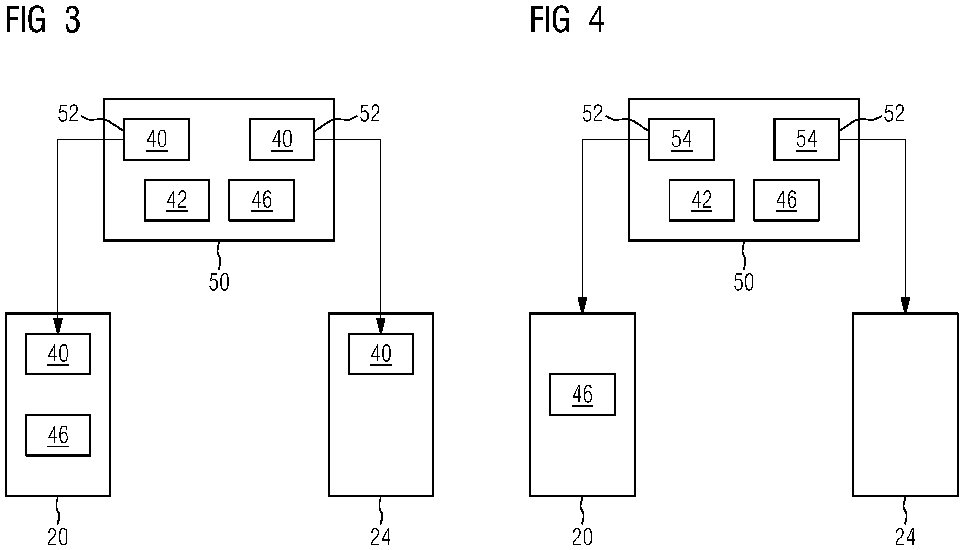

Bei der in FIG 2 gezeigten Situation ist die betriebliche Anforderung 30 mit dem Ventil 20 (Objekt 12) und mit dem Sensor 24 (Objekt 12) verknüpft. Die Verknüpfung erfolgt zum Beispiel mittels der Benennungen 40 der Objekte 12, 20, 24. Ein die betriebliche Anforderung 30 kodierender Datensatz 50 umfasst zur Referenzierung dieser Objekte 12, 20, 24 dann als Referenz 52 diese Benennungen 40, wie dies schematisch vereinfacht in FIG 3 gezeigt ist. Zusätzlich oder alternativ kann die Verknüpfung der betrieblichen Anforderung 30 auch in Form einer direkten Referenzierung der mittels der betrieblichen Anforderung 30 verknüpften Objekte 12, 20, 24 erfolgen. Dann umfasst ein die betriebliche Anforderung 30 kodierender Datensatz 50 als Referenz 52 zum Beispiel die Adressen (Speicheradressen) 54 der verknüpften Objekte 12, 20, 24, wie dies schematisch vereinfacht in FIG 4 gezeigt ist.

Allgemein umfasst ein eine betriebliche Anforderung 30, 31 kodierender Datensatz 50 Referenzen 52 der mittels der betrieblichen Anforderung 30, 31 verknüpften Objekte 12, 20, 24, insbesondere genau eine erste Referenz 52 zur Referenzierung eines ersten Objekts 12, 24 sowie genau eine zweite Referenz 52 zur Referenzierung eines zweiten Objekts 12, 20.

Bei einer Auswertung einer betrieblichen Anforderung 30, 31 (einer automatischen Auswertung des die betriebliche Anforderung 30, 31 kodierenden Datensatzes 50) ist anhand der Referenzen 52 automatisch erkennbar, welche Objekte 12, 20, 24 mittels der betrieblichen Anforderung 30, 31 miteinander verknüpft sind. Speziell ist automatisch erkennbar, welche Art von Objekten 12, 20, 24 miteinander verknüpft sind. Dies ist zum Beispiel an den Typen (Objekttypen 16) der jeweiligen Objekte 12, 20, 24 erkennbar, denn eine Repräsentation eines Ventils 20 in einem Rohrleitungsschema 10 erfordert eine Instanziierung eines auf einem entsprechenden Objekttyp 16 basierenden Objekts 12, 20 und der zugrundeliegende Objekttyp 16 unterscheidet sich von einem Objekttyp 16, wie er beispielsweise für eine Repräsentation einer Pumpe 22 verwendet wird. Zusätzlich oder alternativ ist die Art des jeweiligen Objekts 12, 20, 24 anhand eines den Objekttyp 16 kodierenden und vom jeweiligen Objekt 12, 20, 24 unmittelbar umfassten Datums automatisch erkennbar.

Durch die Art der Beeinflussung, die durch die betriebliche Anforderung 30, 31 spezifiziert wird, ist einerseits automatisch feststellbar, von welchem Objekt 12, 24 die Daten stammen, welche für die Beeinflussung des anderen Objekts 12, 20 wesentlich sind, und andererseits automatisch feststellbar, welches Objekt 12, 20 entsprechend der Daten beeinflusst wird und mittels der von der betrieblichen Anforderung 30, 31 umfassten Wirkungsweise 42 ist automatisch feststellbar, wie die Beeinflussung konkret erfolgen soll. Es ist also automatisch feststellbar, welches Objekt 12, 24 in einer betrieblichen Anforderung 30 als Datenquelle fungiert und welches Objekt 12, 20 in einer betrieblichen Anforderung 30 als Datensenke fungiert. Dies gilt auch für eine nicht gerichtete betriebliche Anforderung 31, zum Beispiel die betriebliche Anforderung 31 in FIG 1, bei der jedes Objekt 12, 20, 24 sowohl Datenquelle als auch Datensenke ist.

Beim dargestellten Beispiel (FIG 2) ist auf die oben skizzierte Art und Weise automatisch erkennbar, dass im Rahmen der betrieblichen Anforderung 30 relevante Daten von einem Durchflusssensor (Sensor 24) stammen und zur Beeinflussung eines Regelventils (Ventil 20) bestimmt sind. Die von der betrieblichen Anforderung 30 (dem die betriebliche Anforderung 30 kodierenden Datensatz 50) umfasste Wirkungsweise 42 bestimmt, wie die von dem Sensor 24 stammenden Daten das Ventil 20 beeinflussen sollen. Eine anhand der Menge 44 ausgewählte Wirkungsweise 42 wie zum Beispiel "wird geregelt von" bedeutet, dass der von dem Sensor 24 erhältliche Messwert durch Veränderung der Stellung des Ventils 20 geregelt werden soll. Als Randbedingung 46 der betrieblichen Anforderung ist dabei zum Beispiel ein Vorzeichen des Regelkreises festgelegt. Beispielsweise bedeutet ein positives Vorzeichen, dass immer dann, wenn der vom Sensor 24 stammende Messwert (Istwert) den als weitere Randbedingung 46 vorgegebenen Sollwert unterschreitet, das Ventil 20 weiter geöffnet werden soll, und immer dann, wenn der Messwert den Sollwert überschreitet, das Ventil 20 weiter geschlossen werden soll.

Im Interesse einer besseren Lesbarkeit der weiteren Beschreibung wird im Folgenden auf den Hinweis auf einen die betriebliche Anforderung 30, 31 kodierenden Datensatz 50 verzichtet und der Datensatz 50 selbst als betriebliche Anforderung 30, 31 bezeichnet. Dies erlaubt kürzere Formulierungen und rechtfertigt sich auch sachlich aus dem Umstand, dass jeweils ein Datensatz 50 aufgrund jeweils einer betrieblichen Anforderung 30, 31 resultiert.

Aus der betrieblichen Anforderung 30 ergibt sich - wie oben beschrieben - anhand der davon umfassten Wirkungsweise 42 die Art der Verknüpfung der mittels der betrieblichen Anforderung 30 verknüpften Objekte 12, 20, 24.

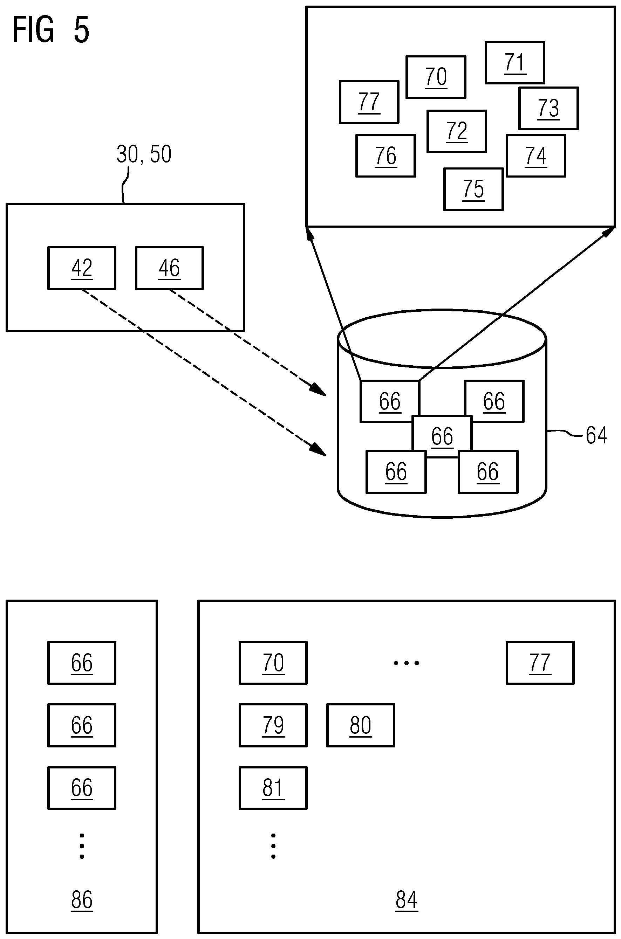

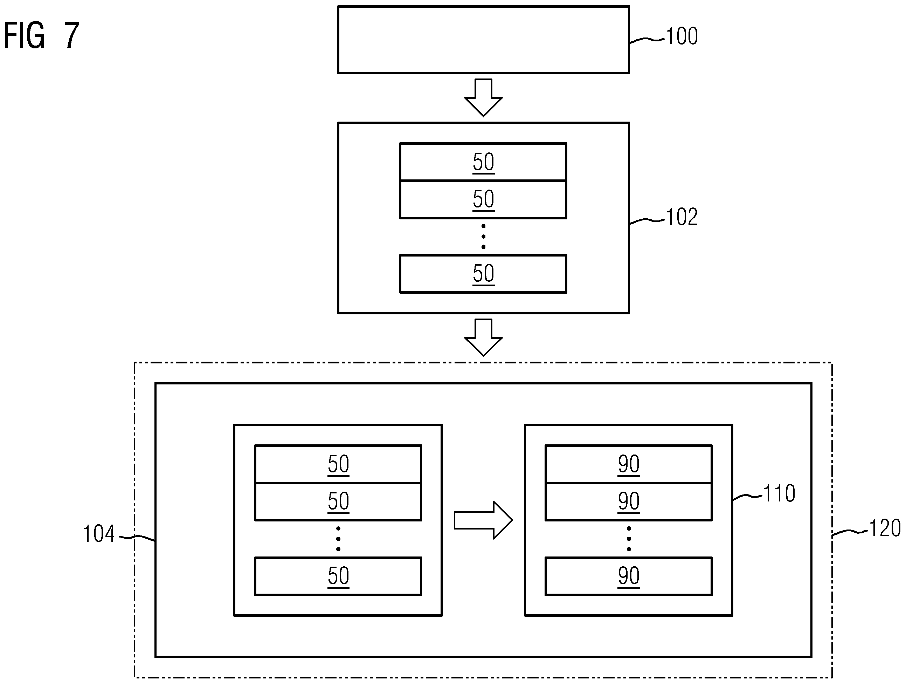

Auf Basis der Wirkungsweise 42 (eines die Wirkungsweise 42 kodierenden und von dem Datensatz 50 umfassten Datums) bzw. der Randbedingung 46 (eines die Randbedingung 46 kodierenden und von dem Datensatz 50 umfassten Datums) erfolgt ein Zugriff auf eine Datenbasis 64 (FIG 5) mit Verfahrensanweisungen 66 (FIG 5) zur automatischen Erstellung einer Software (Automatisierungscomputerprogramm 110; FIG 7), die von einem Computersystem, insbesondere einem Automatisierungssystem, zum Beispiel einer speicherprogrammierbaren Steuerung oder dergleichen, ausgeführt werden kann.

Für jede als Element der Menge 44 von Einflussmöglichkeiten zugelassene Wirkungsweise 42, jede als Element der Menge 48 von Randbedingungen zugelassene Randbedingung 46 und für jede zugelassene Kombination einer Wirkungsweise 42 und einer Randbedingung 46 existiert in der Datenbasis 64 zumindest eine Verfahrensanweisung 66.

Die Darstellung in FIG 5 zeigt schematisch vereinfacht eine betriebliche Anforderung 30 in Form des die betriebliche Anforderung 30 kodierenden Datensatzes 50. Die Datenbasis 64 mit den dort vorgehaltenen Verfahrensanweisungen 66 ist ebenso wie die Verfahrensanweisungen 66 nur schematisch vereinfacht gezeigt. Für eine einzelne Verfahrensanweisung 66 ist schematisch vereinfacht gezeigt, dass diese im Folgenden als Arbeitsschritte 70-77 bezeichnete Datensätze umfasst (jeder Datensatz kodiert einen Arbeitsschritt), welche die Umsetzung einer betrieblichen Anforderung 30, 31 in ausführbare Computerprogrammanweisungen definieren.

Jede Verfahrensanweisung 66 umfasst oder definiert eine Sequenz von Arbeitsschritten 70-81 (zumindest einen Arbeitsschritt) zum schrittweisen, automatischen Aufbau einer Software (Automatisierungscomputerprogramm 110), welche dazu geeignet ist, die geforderte Wirkungsweise 42 bzw. die entsprechende Randbedingung 46 zu realisieren.

Die Darstellung in FIG 5 zeigt auch eine Menge 84 mit Arbeitsschritten 70-81. Diese Menge 84 resultiert aufgrund der automatischen sukzessiven Auswertung der von dem Rohrleitungsschema 10 umfassten betrieblichen Anforderungen 30, 31 bei der automatischen Interpretation des Rohrleitungsschemas 10. Aufgrund einer betrieblichen Anforderung 30, 31 (des jeweiligen Datensatzes 50) sowie der umfassten Wirkungsweise 42 oder der umfassten Wirkungsweise 42 und der oder jeder umfassten Randbedingung 46 erfolgt in der Datenbasis 64 eine Auswahl einer passenden Verfahrensanweisung 66. Die von der ausgewählten Verfahrensanweisung 66 umfassten Arbeitsschritte 70-81 gehen in die Menge 84 ein. Das Auswerten der Datensätze 50 und das Bilden dieser Menge 84 erfolgt automatisch und mittels eines Engineeringwerkzeugs 120 (FIG 7). Das Bilden dieser Menge 84 kann mittels eines Zwischenschritts erfolgen, indem zunächst eine Menge 86 mit den in der Datenbasis 64 ausgewählten Verfahrensanweisungen 66 oder Referenzen auf die ausgewählten Verfahrensanweisungen 66 gebildet wird und die Menge 84 mit den Arbeitsschritten 70-81 dann in einem nachfolgenden Schritt auf Basis der Menge 86 mit den ausgewählten Verfahrensanweisungen 66 gebildet wird.

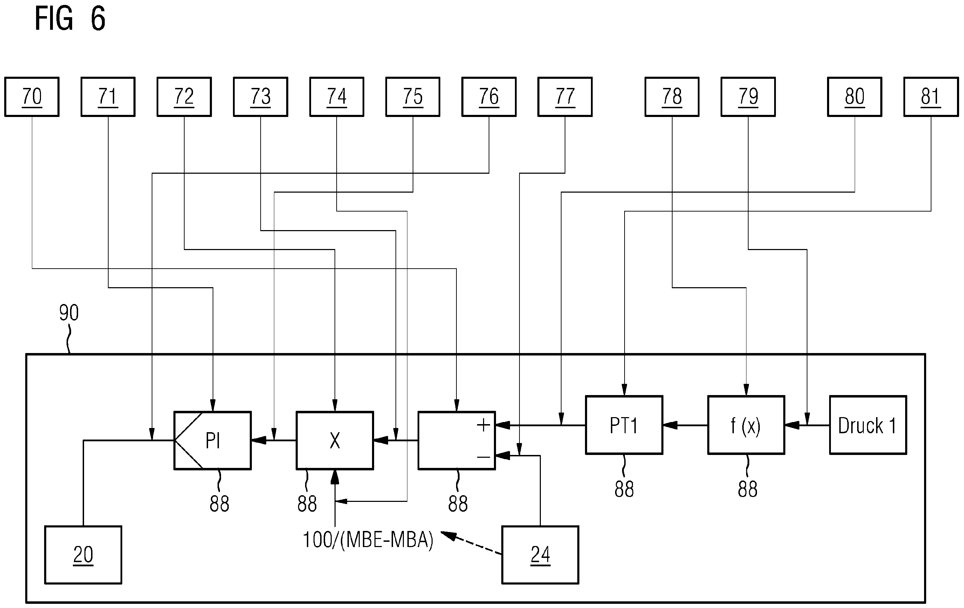

Jeder Arbeitsschritt 70-81 definiert eine Verwendung genau eines Bausteins 88 (FIG 6) oder zumindest eines Bausteins 88 der Automatisierungstechnik. Bausteine 88 der Automatisierungstechnik sind für sich genommen an sich bekannt. Beispiele für Bausteine 88 der Automatisierungstechnik sind Regler (P-Regler, PI-Regler, PID-Regler usw.), Summationsstellen (Addition, Subtraktion), Multiplikationsstellen (Multiplikation, Division), Verzögerungen (PT1-Glied, PT2-Glied usw.), Zuweisungen und so weiter. Die Definition der Verwendung des zumindest einen Bausteins 88 bestimmt zumindest eine Verknüpfung des Bausteins 88 mit zumindest einem anderen Baustein 88 oder mit einer weiteren Datenquelle oder -senke, beispielsweise einem Objekt 12.

Jeder Arbeitsschritt 70-81 umfasst eine Definition, wie der jeweilige Baustein 88 oder die jeweiligen Bausteine 88 in einem Automatisierungscomputerprogramm 110 umzusetzen ist bzw. sind, zum Beispiel indem der Arbeitsschritt 70-81 entsprechende Programmcodeanweisungen, zum Beispiel Programmcodeanweisungen für einen PI-Regelungsalgorithmus, umfasst oder auf solche Programmcodeanweisungen verweist. Des Weiteren umfasst jeder Arbeitsschritt 70-81 eine Definition, wie die definierte Verwendung in ausführbare Computerprogrammanweisungen umsetzbar ist, zum Beispiel indem der Arbeitsschritt 70-81 eine Definition darüber umfasst, wie Ausgangsgrößen eines Bausteins (z.B. das Berechnungsergebnis einer Subtraktionsstelle) als Eingangsgrößen anderer Bausteine (z.B. Regeldifferenz eines Regelungsalgorithmus) zu verwenden sind.

In den Verfahrensanweisungen 66 bzw. den beschriebenen Arbeitsschritten 70-81 ist letztlich das Wissen eines Automatisierungsexperten zur Umsetzung betrieblicher Anforderungen 30, 31 in entsprechende Automatisierungsalgorithmen hinterlegt.

Jede Verfahrensanweisung 66 umfasst automatisch ausführbare Arbeitsschritte 70-81 (jede Verfahrensanweisung 66 zumindest einen automatisch ausführbaren Arbeitsschritt 70-81) und beim Ausführen der Arbeitsschritte 70-81 entsteht die Automatisierungssoftware (Automatisierungscomputerprogramms 110), welche eine Implementation der ursprünglich zugrunde liegenden betrieblichen Anforderungen 30, 31 in Form von mittels eines jeweiligen Automatisierungssystems ausführbaren Computerprogrammanweisungen umfasst.

Die Darstellung in FIG 6 zeigt schematisch vereinfacht eine Umsetzung der Arbeitsschritte 70-81, nämlich den aufgrund der zugrunde liegenden betrieblichen Anforderungen 30, 31 ausgewählten Arbeitsschritten 70-81, d.h. eine Umsetzung der zugrunde liegenden betrieblichen Anforderungen 30, 31 in eine Automatisierungsfunktion 90. Die Umsetzung erfolgt automatisch und mittels eines Engineeringwerkzeugs 120 (FIG 7), indem das Engineeringwerkzeug 120 die einzelnen Arbeitsschritte 70-81 ausführt.

Die Verfahrensanweisung 66 zur Umsetzung der Wirkungsweise 42 "wird geregelt von" umfasst zum Beispiel eine Sequenz von Arbeitsschritten 70-81 wie folgt: Realisiere eine Subtraktion 70, Realisiere einen Regler 71 (zum Beispiel einen P-Regler, d.h. Proportional-Regler, oder einen PI-Regler, d.h. Proportional-/Integral-Regler usw.), Realisiere eine Multiplikation 72, Verwende 73 das Ergebnis der Subtraktion als Multiplikator der Multiplikation 72, Verwende 74 den Wert "100 / ( MBE - MBA )" als Multiplikand der Multiplikation 72, wobei "MBA" der Messbereichsanfang und "MBE" das Messbereichsende des Sensors 24 ist, von dem die betriebliche Anforderung 30 ausgeht (Beginn der Pfeilverbindung), Verwende 75 das Produkt der Multiplikation 72 als Regeldifferenz für den Regler 71, Sende 76 das Reglerausgangssignal als Stellsignal an das Objekt 20, an dem die betriebliche Anforderung 30 endet (Ende der Pfeilverbindung). Die Arbeitsschritte 70-81, jedenfalls zumindest einzelne Arbeitsschritte 70-81, definieren also auch eine Verbindung mit und eine Verwendung von zumindest einem mittels der betrieblichen Anforderung 30 verknüpften Objekt 12, 20, 24.

Die in dem vorangehenden Absatz zuerst genannten Arbeitsschritte 70, 71, 72 (Realisiere eine Subtraktion; Realisiere einen Regler; Realisiere eine Multiplikation) bedeuten jeweils und führen jeweils dazu, dass ein in dem Arbeitsschritt 70, 71, 72 spezifizierter Baustein 88 der Automatisierungstechnik angelegt wird und durch das Anlegen Teil der automatisch erzeugten Automatisierungssoftware (Automatisierungscomputerprogramm 110) wird, nämlich ein Baustein 88, welcher eine Subtraktion implementiert, ein Baustein 88, welcher einen Regler implementiert, und ein Baustein 88, welcher eine Multiplikation implementiert. Die weiteren Arbeitsschritte 73, 74, 75 bedeuten jeweils und führen jeweils dazu, dass in dem Arbeitsschritt spezifizierte Bausteine 88 "beschaltet" werden. Der Ausdruck "beschaltet werden" bedeutet dabei eine Verwendung von einem Baustein 88 stammender Daten (mittels eines gemäß dem Arbeitsschritt beschalteten Ausgangs des Bausteins 88) oder eine Versorgung eines Bausteins 88 mit Daten (mittels eines gemäß dem Arbeitsschritt beschalteten Eingangs des Bausteins 88).

In der Darstellung in FIG 6 ist die durch Umsetzung der Verfahrensanweisung 66 entstehende Funktion (Automatisierungsfunktion 90) veranschaulicht. Auch hier dient die Datenbasis 64 als ein sich nicht erschöpfender "Baukasten", aus dem anhand der jeweiligen Wirkungsweise 42, der jeweiligen Randbedingung 46 oder einer Kombination einer Wirkungsweise 42 und zumindest einer Randbedingung 46 jeweils eine Verfahrensanweisung 66 ausgewählt wird und der oder jeder davon umfasste Arbeitsschritt 70-81 bildet die Basis der resultierenden Automatisierungsfunktion 90. Die Darstellung der resultierenden Automatisierungsfunktion 90 in FIG 6 in Form eines Funktionsdiagramms mit Funktionsblöcken dient der besseren Anschauung und ist beispielhaft zu verstehen. Die von den zugrunde liegenden Verfahrensanweisungen 66 umfassten Arbeitsschritte 70-81 können durch eine Erzeugung solcher Funktionsblöcke und deren Beschaltung oder alternativ auch dadurch umgesetzt werden, dass direkt ein Softwarecode z.B. eines Automatisierungssystems erzeugt wird.

Verfahrensanweisungen 66 sind optional nicht nur den Wirkungsweisen 42 einer betrieblichen Anforderungen 30, 31, sondern auch ihren Randbedingungen 46 zugeordnet. Beispielweise gehört zu der Randbedingung 46 "öffnendes Stellorgan erhöht die Regelgröße" (positives Vorzeichen des Regelkreises) eine Verfahrensanweisung 66, welche eine Sequenz von Arbeitsschritten 70-81 wie folgt umfasst: Verwende 77 das Messsignal des Sensors 24, von dem die betriebliche Anforderung 30 ausgeht, als Subtrahend der Subtraktion 70 und den Sollwert als Minuend der Subtraktion 70. Zu der Randbedingung 46 "öffnendes Stellorgan verringert die Regelgröße" (negatives Vorzeichen des Regelkreises) gehört dagegen eine Verfahrensanweisung 66, welche eine Sequenz von Arbeitsschritten 70-81 wie folgt umfasst: Verwende 77 das Messsignal des Sensors 24, von dem die betriebliche Anforderung 30 ausgeht, als Minuend der Subtraktion 70 und den Sollwert als Subtrahend der Subtraktion 70. Als Verfahrensanweisung 66 zur Randbedingung "der Sollwert ist eine Funktion des Druckes 1" ("Druck 1" sei dabei das Messsignal eines Drucksensors, der im Beispiel-Rohrleitungsschema FIG 2 nicht gezeigt ist) fungiert eine Sequenz von Arbeitsschritten 70-81 wie folgt: Realisiere eine allgemeine Funktion 78, Verwende 79 das Messsignal des Drucksensors 1 als Argument der Funktion 78, Verwende 80 den Funktionswert als Minuend oder Subtrahend der Subtraktion 70. Ob der Funktionswert als Minuend oder Subtrahend zu verwenden ist, ergibt sich dabei wie oben beschrieben, aus der Verfahrensanweisung 66 bzgl. des Vorzeichens des Regelkreises. Als Verfahrensanweisung 66 zur Randbedingung "Sollwertänderung verzögert" fungiert eine Sequenz von Arbeitsschritten 70-81 wie folgt: Realisiere eine Verzögerungsfunktion 81 (z.B. Verzögerungsglied erster Ordnung PT1) zwischen dem Sollwert und der Subtraktion 70. Das Ergebnis der Umsetzung der Verfahrensanweisungen aus den Randbedingungen 46 ist in der Darstellung in FIG 5 bereits gezeigt.

Durch Auswertung einer jeweiligen betrieblichen Anforderung 30, 31, der jeweils zugehörigen Wirkungsweise 42 und der oder jeder zugehörigen Randbedingung 46 sowie durch Umsetzung der der Wirkungsweise 42 und Randbedingung(en) 46 zugehörigen Verfahrensanweisungen 66 wird automatisch eine Automatisierungsfunktion 90 generiert. Zu beachten ist hierbei, dass es weitere betriebliche Anforderungen 30 sowie zugehörige Wirkungsweisen 42 und Randbedingungen 46 geben kann, welche die gleiche Automatisierungsfunktion 90 beeinflussen. Beispielweise könnte eine betriebliche Anforderung 30 lauten "Druck 2 begrenzt Durchfluss 1", was bedeutet, dass das Regelventil 1 zwar den Durchfluss 1 regeln soll, aber nur so lange wie eine bestimmter Wert (z.B. Maximalwert) für den Druck 2 nicht überschritten wird. Die Umsetzung dieser betrieblichen Anforderung 30 durch Realisierung der entsprechenden Verfahrensanweisungen 66 wird die Automatisierungsfunktion 90, welche ursprünglich durch die betriebliche Anforderung 30 "wird geregelt von" entstanden ist, modifiziert und erweitert.

Weil zumindest einzelne Arbeitsschritte 70-81 eine Verknüpfung mit den mittels der zugrunde liegenden betrieblichen Anforderung 30 verknüpften Objekten 12, 20, 24 bewirken, ist auch die durch die Arbeitsschritte 70-81 erzeugte Automatisierungsfunktion 90 selbst mit den mittels der zugrunde liegenden betrieblichen Anforderung 30 verknüpften Objekten 12, 20, 24 verbunden.

Die Verknüpfung der Automatisierungsfunktion 90 mit einem Objekt 12 besteht zum Beispiel, indem ein in einem Arbeitsschritt 70-81 definierter Baustein 88 Daten, welche von einem als Datenquelle fungierenden Objekt 12 stammen, zumindest erhält oder erhält und verarbeitet. Das Erhalten der Daten oder genau eines Datums ist zum Beispiel in Form eines Zugriffs auf einen Datenbereich des jeweiligen Objekts 12 realisiert. Ebenso besteht die Verknüpfung der Automatisierungsfunktion 90 mit einem Objekt 12 zum Beispiel, indem ein in einem Arbeitsschritt 70-81 definierter Baustein 88 Daten an ein als Datenquelle fungierendes Objekt 12 übermittelt. Das Übermitteln der Daten oder genau eines Datums ist zum Beispiel ebenfalls in Form eines Zugriffs auf einen Datenbereich des jeweiligen Objekts 12 realisiert.

Bei dem anhand von FIG 2 erläuterten Beispiel ist die Automatisierungsfunktion 90 mit dem Sensor 24 und dem Ventil 20 verbunden. Durch Zugriff auf den Datenbereich des Sensors 24 steht ein vom Sensor 24 aufgenommener Messwert im Bereich der Automatisierungsfunktion 90 zur Verarbeitung zur Verfügung und zur Beeinflussung der Stellung des Ventils 20 wird ein mittels der Automatisierungsfunktion 90 erzeugtes Reglerausgangssignal als Stellsignal an das Ventil 20 ausgegeben, zum Beispiel indem das Stellsignal in einen dortigen Datenbereich geschrieben wird.

Wie anhand des Beispiels bereits deutlich wird, beeinflussen sich die Verfahrensanweisungen 66 gegenseitig und sind nicht unabhängig voneinander. Insbesondere kann eine Automatisierungsfunktion 90, die durch Umsetzung einer Verfahrensanweisung 66 erzeugt wurde, durch Umsetzung einer weiteren Verfahrensanweisung 66 wieder modifiziert werden. Hierzu kann beispielweise gehören, dass neue Teilfunktionen installiert werden, dass hierzu bereits bestehende Datenverbindungen (in FIG 5 als Pfeile im Funktionsdiagramm dargestellt) wieder aufgebrochen werden, das neue Datenverbindungen installiert werden, dass bestehende Teilfunktionen durch andere ersetzt werden usw.

Für ein System (Engineeringsystem), welches eine Liste von Verfahrensanweisungen 66, die entsprechend einer oder mehreren betrieblichen Anforderungen 30, 31 und ihrer zugehörigen Wirkungsweisen 42 und Randbedingungen 46 aus der Datenbasis 64 ausgewählt wurde, umsetzt, ist bevorzugt vorgesehen, dass in der Datenbasis 64 für die von den dortigen Verfahrensanweisungen 66 umfassten Arbeitsschritte 70-81 eine Prioritätsreihenfolge definiert ist. Die Priorität kann sich auf eine Verfahrensanweisung 66 und damit auf die davon umfassten Arbeitsschritte 70-81 insgesamt und/oder jeden einzelnen Arbeitsschritt 70-81 beziehen. Bei einer Vorgabe einer Priorität für eine Verfahrensanweisung 66 kann für jeden davon umfassten Arbeitsschritt 70-81 eine relative Änderung der vorgegebenen Priorität oder eine absolute, unveränderliche Priorität vorgesehen sein, so dass auch hier zumindest einzelne auf ein und dieselbe Verfahrensanweisung 66 zurückgehenden Arbeitsschritte 70-81 unterschiedliche Prioritäten erhalten können.

Die Prioritätsreihenfolge führt dazu, dass ein Arbeitsschritt 70-81 mit einer höheren Priorität vor einem anderen Arbeitsschritt 70-81 mit einer niedrigeren Priorität ausgeführt wird. Beim Umsetzen der betrieblichen Anforderungen 30, 31 werden dann zunächst die zugehörigen Verfahrensanweisungen 66 ermittelt und zusammengestellt. Die ermittelten Verfahrensanweisungen 66 sowie den von diesen umfassen Arbeitsschritten 70-81 ist jeweils eine Priorität zugeordnet. Es ergibt sich also anhand der ermittelten Verfahrensanweisungen 66 eine Menge mit Arbeitsschritten 70-81 und innerhalb dieser Menge werden die Arbeitsschritte 70-81 entsprechend ihrer jeweiligen Priorität geordnet. Die Arbeitsschritte 70-81 werden schließlich entsprechend der Prioritätsreihenfolge ausgeführt.

Beispielweise wird für die Arbeitsschritte 70-81, die zur Erzeugung der in FIG 6 dargestellten Automatisierungsfunktion 90 anzuwenden sind, bereits in der Datenbasis 64 festgelegt, dass alle Arbeitsschritte 70-81 der Verfahrensanweisung 66 zur Wirkungsweise 42 "wird geregelt von" mit höchster Priorität auszuführen sind, wobei die Prioritätenreihenfolge aller Arbeitsschritte 70-81 innerhalb dieser Verfahrensanweisung beliebig ist. Der Arbeitsschritt "Verwende 77 das Messsignal des Sensors 24, von dem die betriebliche Anforderung 30 ausgeht, als Subtrahend der Subtraktion 70", der zur Verfahrensanweisung 66 zur Randbedingung 46 "öffnendes Stellorgan erhöht die Regelgröße" gehört, hat die nächsthöhere Priorität. Der Arbeitsschritt "Verwende 77 das Messsignal des Sensors 24, von dem die betriebliche Anforderung 30 ausgeht, als Minuend der Subtraktion 70", der zur Verfahrensanweisung 66 zur Randbedingung 46 "öffnendes Stellorgan verringert die Regelgröße" gehört, hat eine ähnliche Priorität wie der zuvor genannte Arbeitsschritt, wobei unerheblich ist, welcher Arbeitsschritt die knapp höhere oder niedrigere Priorität hat. Die nächsten Arbeitsschritte in der Prioritätenreihenfolge sind dann alle Arbeitsschritte der Verfahrensanweisung 66 zur Randbedingung 46 "der Sollwert ist eine Funktion des Druckes 1", wobei die Prioritätenreihenfolge der Arbeitsschritte innerhalb dieser Verfahrensanweisung 66 beliebig ist. Der Arbeitsschritt "Verwende 77 den Sollwert als Minuend der Subtraktion 70" aus der Verfahrensanweisung 66 zur Randbedingung 46 "öffnendes Stellorgan erhöht die Regelgröße" hat die nächsthöhere Priorität. Der Arbeitsschritt, der zur Verfahrensanweisung 66 zur Randbedingung 46 "Sollwertänderung verzögert" gehört, hat im Beispiel die niedrigste Priorität.

Der Vorteil der hier vorgeschlagenen Vorgehensweise besteht darin, dass der Anwender durch Wahl einer oder mehrerer Wirkungsweisen 42 aus einer vorgegebenen Menge 44 von Einflussmöglichkeiten und Wahl einer oder mehrerer Randbedingungen 46 aus einer vorgegebenen Menge 48 von Randbedingungen praktisch beliebige betriebliche Anforderungen 30, 31 definieren kann, die dann automatisch in entsprechende Automatisierungsfunktionen 90 umgesetzt werden. Dadurch sind auch Automatisierungsfunktionen 90 automatisch realisierbar, die für eine bestimmte Anlage, wie sie in einem Rohrleitungsschema 10 beschrieben ist, in ihrer Gesamtheit noch nie vom Menschen vorgedacht und definiert wurden.

Die Darstellung in FIG 7 zeigt die bisher erläuterten Aspekte der hier vorgeschlagenen Neuerung in Form eines schematisch vereinfachten Flussdiagramms.

In einem ersten Schritt 100 werden - durch einen Bediener - in einem Rohrleitungsschema 10 betriebliche Anforderungen 30, 31 mit Wirkungsweisen 42 oder mit Wirkungsweisen 42 und Randbedingungen 46 definiert.

In einem zweiten, vorzugsweise automatisch ausgeführten Schritt 102 werden die definierten betrieblichen Anforderungen 30, 31, jeweils mit deren Wirkungsweisen 42 und Randbedingungen 46 für eine automatische Weiterverarbeitung zusammengestellt. Als Ergebnis der Zusammenstellung resultiert eine Mehrzahl von Datensätzen 50, nämlich eine Mehrzahl von Datensätzen 50, welche jeweils eine betriebliche Anforderung 30, 31 kodieren. Soweit solche Datensätze 50 beim Definieren betrieblicher Anforderungen 30, 31 mit dem Rohrleistungsschema 10 (also den Daten des Rohrleistungsschemas 10) verbunden sind, entsteht diese Zusammenstellung von Datensätzen 50 zum Beispiel, indem die Datensätze 50 automatisch in den Daten Rohrleistungsschemas 10 identifiziert und aus den Daten des Rohrleistungsschemas 10 extrahiert werden. Alternativ kann diese Zusammenstellung von Datensätzen 50 auch beim Definieren betrieblicher Anforderungen 30, 31 unmittelbar und unabhängig von den Daten des Rohrleitungsschemas 10 erzeugt werden. In jedem Fall steht für die automatische weitere Verarbeitung eine Folge von Datensätzen 50 zur Verfügung, wie dies schematisch vereinfacht in der Darstellung in FIG 7 zusammen mit dem zweiten Schritt 102 gezeigt ist.

In einem dritten Schritt 104 wird die Folge von Datensätzen 50 automatisch abgearbeitet. Dabei entsteht auf Basis jedes Datensatzes 50 entweder eine Automatisierungsfunktion 90 (anhand des Datensatzes 50 wird eine Verfahrensanweisung 66 ausgewählt; die Verfahrensanweisung 66 umfasst Arbeitsschritte 70-81; eine Ausführung der Arbeitsschritte 70-81 erzeugt die Automatisierungsfunktion 90; vgl. FIG 5 und FIG 6) oder es wird eine bereits erzeugte Automatisierungsfunktion 90 modifiziert oder erweitert oder es werden zwei oder mehr bereits erzeugte Automatisierungsfunktionen 90 funktional miteinander verbunden. Dabei entsteht automatisch auf Basis der Folge von Datensätzen 50 eine Folge von Automatisierungsfunktionen 90, wobei die Anzahl der resultierenden Automatisierungsfunktionen 90 durchaus unterschiedlich von der Anzahl der von der Folge von Datensätzen 50 umfassten Datensätze 50 sein kann. Die Gesamtheit der resultierenden Automatisierungsfunktionen 90 stellt ein automatisch erzeugtes Automatisierungscomputerprogramm 110 dar. Bei einer Ausführung eines solchen Automatisierungscomputerprogramms 110 werden die davon umfassten Automatisierungsfunktionen 90 ausgeführt.

Das Automatisierungscomputerprogramm 110 ist die weiter oben bereits erwähnte Software, welche dazu geeignet ist, die betrieblichen Anforderungen 30, 31 und deren Wirkungsweisen 42 und Randbedingungen 46 zu realisieren. Das Automatisierungscomputerprogramm 110 ist vollständig erzeugt, wenn alle von der Folge von Datensätzen 50 umfassten Datensätze 50 abgearbeitet sind. Das Abarbeiten aller Datensätze 50 erfolgt mittels eines in Form eines Computerprogramms implementierten Engineeringwerkzeugs 120, welche zumindest den in FIG 6 gezeigten dritten Schritt 104, optional den zweiten und den dritten Schritt 102, 104, automatisch ausführt. Insofern ist das Engineeringwerkzeug 120 in Form eines zumindest den dritten Schritt 104 umschließenden Rahmens gezeigt.

Das Engineeringwerkzeug 120 wird in grundsätzlich an sich bekannter Art und Weise zur automatischen Ausführung des hier vorgeschlagenen Verfahrens mittels eines als Engineeringsystem fungierenden Computers ausgeführt und ist dafür in einen Speicher des Computers geladen.

Einzelne im Vordergrund stehende Aspekte der hier eingereichten Beschreibung lassen sich damit kurz wie folgt zusammenfassen: Der hier vorgeschlagene Ansatz ermöglicht eine automatische Interpretation eines Rohrleitungsschemas 10, nämlich eines Objekte 12, 20, 22, 24 umfassenden Rohrleitungsschemas 10. Jeweils zumindest zwei Objekte 12, 20-24 sind mit betrieblichen Anforderungen 30, 31 verknüpft, wobei eine betriebliche Anforderung 30, 31 auf Basis einer vorgegebenen Menge 44 von Wirkungsweisen 42 sowie auf Basis einer vorgegebenen Menge 48 von Randbedingungen 46 definiert wird. Bei der automatischen Interpretation des Rohrleitungsschemas 10 werden sukzessive die von dem Rohrleitungsschema 10 umfassten betrieblichen Anforderungen 30, 31 ausgewertet. Dabei wird zu einer betrieblichen Anforderung 30, 31 und zumindest auf Basis einer von der jeweiligen betrieblichen Anforderung 30, 31 als Zweckbestimmung umfassten Wirkungsweise 42 eine Automatisierungsfunktion 90 erzeugt, welche mit den mittels der zugrunde liegenden betrieblichen Anforderung 30 verknüpften Objekten 12, 20, 24 verbunden ist.

## Patentansprüche

1. Verfahren zur Erzeugung von Automatisierungsfunktionen (90) durch automatische Interpretation eines Rohrleitungsschemas (10),
wobei das Rohrleitungsschema (10) Objekte (12, 20, 22, 24) und Verbindungen (14) zwischen Objekten (12, 20-24) umfasst,
wobei Objekte (12, 20-24) und/oder Verbindungen (14) mit betrieblichen Anforderungen (30, 31) verknüpft sind, **dadurch gekennzeichnet,**
**dass** in einem ersten Schritt (100) durch einen Bediener in dem Rohrleitungsschema (10) betriebliche Anforderungen (30, 31) auf Basis einer vorgegebenen Menge (44) von Wirkungsweisen (42) sowie auf Basis einer vorgegebenen Menge (48) von Randbedingungen (46) definiert werden,
wobei in einem zweiten Schritt (102) durch eine automatische Interpretation des Rohrleitungsschemas (10) sukzessive die von dem Rohrleitungsschema (10) umfassten betrieblichen Anforderungen (30, 31) ausgewertet werden und eine Mehrzahl von Datensätzen (50) erzeugt wird, welche jeweils eine betriebliche Anforderung (30,31) kodieren,
wobei auf Basis der Datensätze (50) zu einer betrieblichen Anforderung (30, 31) und zumindest auf Basis einer von der jeweiligen betrieblichen Anforderung (30, 31) als Zweckbestimmung umfassten Wirkungsweise (42) in einem dritten Schritt (104) eine Automatisierungsfunktion (90) erzeugt, modifiziert oder erweitert wird oder zwei oder mehr bereits erzeugte Automatisierungsfunktionen (90) funktional miteinander verbunden werden und
wobei die Automatisierungsfunktion mit den mittels der zugrunde liegenden betrieblichen Anforderung (30) verknüpften Objekten (12, 20, 24) verbunden ist.

2. Verfahren nach Anspruch 1,
wobei eine Automatisierungsfunktion (90) zu einer betrieblichen Anforderung (30, 31) und auf Basis einer von der jeweiligen betrieblichen Anforderung (30, 31) umfassten Wirkungsweise (42) sowie einer von der jeweiligen betrieblichen Anforderung (30, 31) umfassten Randbedingung (46) erzeugt wird.

3. Verfahren nach Anspruch 1 oder 2,
wobei eine Automatisierungsfunktion (90) zu einer betrieblichen Anforderung (30, 31) auf Basis einer Datenbasis (64) mit Verfahrensanweisungen (66) erzeugt wird,
wobei zu jeder von einer betrieblichen Anforderung (30, 31) umfassten Wirkungsweise (42) oder Randbedingung (46) oder jeder Kombination einer Wirkungsweise (42) mit zumindest einer Randbedingung (46) in der Datenbasis (64) eine Verfahrensanweisung (66) vorgehalten wird,
wobei zu jeder betrieblichen Anforderung (30, 31) auf Basis der davon umfassten Wirkungsweise (42) und/oder Randbedingung (46) aus der Datenbasis (64) eine zugehörige Verfahrensanweisung (66) ausgewählt wird,
wobei jede Verfahrensanweisung (66) zumindest einen Arbeitsschritt (70-81) umfasst und
wobei jeder Arbeitsschritt (70-81) eine automatisch auswertbare Definition zur Verwendung zumindest eines Bausteins (88) der Automatisierungstechnik und zur Umsetzung des oder jedes jeweiligen Bausteins (88) und dessen bzw. deren Verwendung in ausführbare Computerprogrammanweisungen umfasst.

4. Computerprogramm (120) zur Erzeugung von Automatisierungsfunktionen (90) durch automatische Interpretation eines Rohrleitungsschemas (10),
mit einer Implementation des Verfahrens nach einem der Ansprüche 1 bis 3.

5. Engineeringwerkzeug (120) zur automatischen Ausführung des Verfahrens nach einem der Verfahrensschritte gemäß einem der Ansprüche 1 bis 3 mit Funktionen zum Erstellen und Bearbeiten eines Rohrleitungsschemas.

6. Digitales Speichermedium mit elektronisch auslesbaren Steuersignalen, die so mit einem Computer zusammenwirken können, dass ein Verfahren nach einem der Ansprüche 1 bis 3 ausgeführt wird.

## Claims

1. Method for generating automation functions (90) by automatically interpreting a piping diagram (10),
wherein the piping diagram (10) comprises objects (12, 20, 22, 24) and connections (14) between objects (12, 20-24),
wherein objects (12, 20-24) and/or connections (14) are linked with operational requirements (30, 31), **characterised in that**
in a first step (100) operational requirements (30, 31) are defined on the basis of a predefined set (44) of operating principles (42) and on the basis of a predefined set (48) of boundary conditions (46) by means of an operator in the piping diagram (10),
wherein in a second step (102) the operational requirements (30, 31) included in the piping diagram (10) are successively evaluated by an automatic interpretation of the piping diagram (10) and a plurality of data records (50) is generated which encode an operational requirement (30, 31) in each case,
wherein in a third step (104) an automation function (90) is generated, modified or extended on the basis of the data records (50) for an operational requirement (30, 31) and at least on the basis of an operating principle (42) included as an intended purpose in the respective operational requirement (30, 31), or two or more already generated automation functions (90) are functionally connected to one another and
wherein the automation function is connected to the objects (12, 20, 24) linked by means of the underlying operational requirement (30).

2. Method according to claim 1,
wherein an automation function (90) is generated for an operational requirement (30, 31) and on the basis of an operating principle (42) included in the respective operational requirement (30, 31) as well as of a boundary condition (46) included in the respective operational requirement (30, 31).

3. Method according to claim 1 or 2,
wherein an automation function (90) is generated for an operational requirement (30, 31) on the basis of a database (64) containing process instructions (66),
wherein a process instruction (66) is held available in the database (64) for each operating principle (42) or boundary condition (46) included in an operational requirement (30, 31) or each combination of an operating principle (42) with at least one boundary condition (46),
wherein an associated process instruction (66) is selected from the database (64) for each operational requirement (30, 31) on the basis of the operating principle (42) and/or boundary condition (46) included therein,
wherein each process instruction (66) comprises at least one process step (70-81), and
wherein each process step (70-81) comprises an automatically evaluable definition for the use of at least one building block (88) of the automation technology and for transforming the or each respective building block (88) and its or their use into executable computer program instructions.

4. Computer program (120) for generating automation functions (90) by automatically interpreting a piping diagram (10),
comprising an implementation of the method according to one of claims 1 to 3.

5. Engineering tool (120) for automatically executing the method in accordance with one of the method steps according to one of claims 1 to 3 having functions for creating and processing a piping diagram.

6. Digital storage medium having electronically readable control signals that can interact with a computer in such a way that a method according to one of claims 1 to 3 is performed.

## Revendications

1. Procédé de production de fonctions (90) d'automatisation par interprétation automatique d'un schéma (10) de tuyauterie,
dans lequel le schéma (10) de tuyauterie comprend des objets (12, 20, 22, 24) et des liaisons (14) entre des objets (12, 20 - 24),
dans lequel des objets (12, 20 - 24) et/ou des liaisons (14) sont combinés à des exigences (30, 31) d'exploitation, **caractérisé en ce que**, dans un premier stade (100), on définit par un opérateur des exigences (30, 31) d'exploitation dans le schéma (10) de tuyauterie, sur la base d'un ensemble (44) donné à l'avance de modes (42) d'action, ainsi que sur la base d'un ensemble (48) donné à l'avance de conditions (46) aux limites,
dans lequel, dans un deuxième stade (102), on évalue, par une interprétation automatique du schéma (10) de tuyauterie, successivement les exigences (30, 31) d'exploitation impliquées par le schéma (10) de tuyauterie et on produit une pluralité d'ensembles (50) de données, qui codent chacun une exigence (30, 31) d'exploitation,
dans lequel, sur la base des ensembles (50) de données se rapportant à une exigence (30, 31) d'exploitation et au moins sur la base d'un mode (42) d'action impliqué comme détermination de but par l'exigence (30, 31) d'exploitation respective, dans un troisième stade (104), on produit, modifie ou étend une fonction (90) d'automatisation ou on relie entre elles fonctionnellement deux ou plusieurs fonctions (90) d'automatisation déjà produites et
dans lequel la fonction d'automatisation est reliée aux objets (12, 20, 24) au moyen de l'exigence (30) d'exploitation à sa base.

2. Procédé suivant la revendication 1,
dans lequel on produit une fonction (90) d'automatisation par rapport à une exigence (30, 31) d'exploitation et sur la base d'un mode (42) d'action impliqué par l'exigence (30, 31) d'exploitation respective, ainsi que d'une condition aux limites (46) impliquée par l'exigence (30, 31) d'exploitation respective.

3. Procédé suivant la revendication 1 ou 2,
dans lequel on produit une fonction (90) d'automatisation par rapport à une exigence (30, 31) d'exploitation sur la base d'une base (64) de données ayant des instructions (66) de procédé,
dans lequel on procure une instruction (66) de procédé dans la base (64) de données pour chaque mode (42) d'action impliqué par une exigence (30, 31) d'exploitation ou condition (46) aux limites ou chaque combinaison d'un mode (42) d'action à au moins un condition (46) aux limites,
dans lequel on sélectionne une instruction (66) de procédé lui appartenant dans la base (64) de données pour chaque exigence (30, 31) d'exploitation sur la base du mode (42) d'action et/ou de la condition (46) aux limites qu'elle implique,
dans lequel chaque instruction (66) de procédé comprend au moins un stade (70 - 81) de travail,
dans lequel chaque stade (70 - 81) de travail comprend une définition exploitable automatiquement d'utilisation d'au moins un module (88) de la technique d'automatisation et de transformation du ou de chaque module (88) respectif et de son utilisation en des instructions de programme d'ordinateur réalisables.

4. Programme (120) d'ordinateur pour la production de fonctions (90) d'automatisation par interprétation automatique d'un schéma (10) de tuyauterie,
comprenant une mise en œuvre du procédé suivant l'une des revendications 1 à 3.

5. Outil (120) d'ingénierie pour l'exécution automatique du procédé suivant l'un des stades de procédé selon l'une des revendications 1 à 3 ayant des fonctions d'établissement et de traitement d'un schéma de tuyauterie.

6. Support de mémoire numérique comprenant des signaux de commande pouvant être déchiffrés électroniquement, qui peuvent coopérer avec un ordinateur, de manière à exécuter un procédé suivant l'une des revendications 1 à 3.
